(19) Europäisches Patentamt
European Patent Office
Office européen des brevets

(11) **EP 4 317 281 A1**

(12) **EUROPEAN PATENT APPLICATION**
published in accordance with Art. 153(4) EPC

(43) Date of publication:
**07.02.2024 Bulletin 2024/06**

(21) Application number: **22779465.8**

(22) Date of filing: **27.01.2022**

(51) International Patent Classification (IPC):
*C08K 5/01* (2006.01)     *C08L 23/08* (2006.01)
*C08L 23/12* (2006.01)    *C08L 53/02* (2006.01)
*C08L 83/04* (2006.01)

(52) Cooperative Patent Classification (CPC):
**C08K 5/01; C08L 23/08; C08L 23/12; C08L 53/02;
C08L 83/04**

(86) International application number:
**PCT/JP2022/003164**

(87) International publication number:
**WO 2022/209235 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.03.2021 JP 2021062279**

(71) Applicant: **Mitsui Chemicals, Inc.
Tokyo 104-0028 (JP)**

(72) Inventors:
• **NAKATSUJI, Ryo**
 **Sodegaura-shi, Chiba 299-0265 (JP)**
• **JITSUKATA, Masakazu**
 **Sodegaura-shi, Chiba 299-0265 (JP)**
• **YAMAMOTO, Kanji**
 **Sodegaura-shi, Chiba 299-0265 (JP)**
• **SASAKI, Taisei**
 **Sodegaura-shi, Chiba 299-0265 (JP)**

(74) Representative: **Hoffmann Eitle
Patent- und Rechtsanwälte PartmbB
Arabellastraße 30
81925 München (DE)**

(54) **THERMOPLASTIC ELASTOMER COMPOSITION AND USE THEREOF**

(57) An object of the present invention is to provide a thermoplastic elastomer composition having low hardness and being flexible with excellent scratch resistance.

The present invention pertains to a thermoplastic elastomer composition containing (A) to (D) below:
(A) 100 parts by mass of a propylene polymer;
(B) 50 to 300 parts by mass of an ethylene/α-olefin copolymer including units of ethylene and α-olefin having 3 to 20 carbon atoms;
(C) 50 to 280 parts by mass of a softener; and
(D) 90 to 400 parts by mass of a hydrogenated product of a block copolymer including at least one block mainly including a conjugated diene monomer unit and at least one block mainly including a vinyl aromatic monomer unit.

EP 4 317 281 A1

**Description**

Technical Field

The present invention relates to a thermoplastic elastomer composition and an application thereof.

Background Art

Olefinic thermoplastic elastomers are sometimes used as interior surface materials for instrument panels, door trims, and other parts of automobiles from the viewpoint that weight reduction of materials is required. In order to shape sheets for interior surface materials made of olefinic thermoplastic elastomers into, for example, instrument panels and a door trims, vacuum forming and injection molding are generally performed.

As the olefinic thermoplastic elastomers for injection molding, for example, WO2010/067564 (Patent Literature 1) proposes a composition containing polypropylene resin, an olefinic copolymer rubber, a hydrogenated product of a block copolymer having a vinyl aromatic monomer unit, and a softener at a predetermined ratio, and WO2011/155571 (Patent Literature 2) proposes a thermoplastic elastomer composition containing a polypropylene resin, a softener, and a polyorganosiloxane at a predetermined ratio.

Citation List

Patent Literature

    Patent Literature 1: WO2010/067564
    Patent Literature 2: WO2011/155571

Summary of Invention

Technical Problem

In recent years, there has been a demand for a material that are less hard and more flexible than a conventional thermoplastic elastomer composition from the viewpoint of improving a tactile sensation while maintaining excellent scratch resistance. The thermoplastic elastomer compositions described in Patent Literatures 1 and 2 are designed to have excellent scratch resistance at a conventionally accepted hardness, but have insufficient scratch resistance in a low-hardness region that has been recently required, and thus further improvement is desired.

An object of the present invention is to provide a thermoplastic elastomer composition having low hardness and being flexible with excellent scratch resistance.

Solution to Problem

The present invention pertains to a thermoplastic elastomer composition containing (A) to (D) below:

    (A) 100 parts by mass of a propylene polymer;
    (B) 50 to 300 parts by mass of an ethylene/$\alpha$-olefin copolymer including units of ethylene and $\alpha$-olefin having 3 to 20 carbon atoms;
    (C) 50 to 280 parts by mass of a softener; and
    (D) 90 to 400 parts by mass of a hydrogenated product of a block copolymer including at least one block mainly including a conjugated diene monomer unit and at least one block mainly including a vinyl aromatic monomer unit.

Advantageous Effects of Invention

The thermoplastic elastomer composition of the present invention has low hardness and is flexible with excellent scratch resistance, and as a molded body, is suitable for various known applications such as automobile parts, civil engineering and building materials, electrical and electronic parts, sanitary goods, films or sheets, foams, and artificial leather. In particular, the thermoplastic elastomer composition can be suitably used for automobile parts such as automobile interior parts and surface materials such as artificial leather.

Description of Embodiments

In the present specification, a numerical range expressed with "to" means a range including numerical values placed before and after "to" as a lower limit value and an upper limit value, respectively.

<Propylene polymer (A)>

A propylene polymer (A) (hereinafter sometimes referred to as a "component (A)"), one of the components of the thermoplastic elastomer composition of the present invention, refers to a polymer in which the content of a constituent unit derived from propylene among constituent units constituting the polymer is 50 mol% or more, and the content of the constituent unit derived from propylene in the component (A) is preferably 90 mol% or more.

The component (A) according to the present invention may be of one type or two or more types.

The component (A) according to the present invention may be a propylene homopolymer or a copolymer of propylene and a comonomer other than propylene.

The structure of the component (A) according to the present invention is not particularly limited, and for example, a constituent unit moiety derived from propylene may have an isotactic structure, a syndiotactic structure, or an atactic structure but is preferably an isotactic structure. In addition, the copolymer may be any one of a random type (also referred to as random PP), a block type (also referred to as block PP: bPP), and a graft type.

The comonomer may be another monomer copolymerizable with propylene and is preferably an $\alpha$-olefin having 2 or 4 to 10 carbon atoms. Specific examples thereof include ethylene, 1-butene, 1-pentene, 4-methyl-1-pentene, 1-hexene, 1-heptene, 1-octene, 1-nonene, and 1-decene. Among these, ethylene, 1-butene, 1-pentene, 4-methyl-1-pentene, 1-hexene, 1-heptene, and 1-octene are preferable. These comonomers may be used singly or in combinations of two or more thereof.

The content of the constituent unit derived from the comonomer in the copolymer is preferably 10 mol% or less from the viewpoint of, for example, flexibility.

The component (A) according to the present invention may be synthesized by a conventionally known method, or may be a commercially available product. Examples of the commercially available product include polypropylene manufactured by SunAllomer Ltd., Prime Polypro manufactured by Prime Polymer Co., Ltd., NOVATEC manufactured by Japan Polypropylene Corporation, and SCG PP manufactured by SCG Plastics.

The component (A) according to the present invention may be a crystalline polymer or a non-crystalline polymer. Here, the term "crystalline" means that a melting point (Tm) is observed by differential scanning calorimetry (DSC).

When the component (A) according to the present invention is a crystalline polymer, a melting point thereof (in accordance with the measurement method of JIS K 7121) is preferably 100°C or higher, more preferably 120°C or higher from the viewpoint of, for example, heat resistance, and preferably 180°C or lower, and more preferably 170°C or lower.

The MFR (according to the method of measurement of ASTM D 1238-65T, 230°C, 2.16 kg load) of the component (A) according to the present invention is preferably 0.1 to 100 g/10 min, and more preferably 0.1 to 50 g/10 min.

The MFR of the component (A) according to the present invention in the above range can easily attain a composition having excellent heat resistance, mechanical strength, flowability, and forming processability.

<Ethylene/$\alpha$-olefin copolymer (B)>

An ethylene/$\alpha$-olefin copolymer (B), one of the components of the thermoplastic elastomer composition of the present invention, is an ethylene/$\alpha$-olefin copolymer including a unit derived from ethylene and a unit derived from an $\alpha$-olefin having 3 to 20 carbon atoms.

The ethylene/$\alpha$-olefin copolymer (B) (hereinafter sometimes referred to as a "component (B)") according to the present invention can be obtained by copolymerizing at least ethylene and an $\alpha$-olefin having 3 to 20 carbon atoms. Examples of the $\alpha$-olefin having 3 to 20 carbon atoms include propylene, 1-butene, 1-pentene, 1-hexene, 4-methyl-1-pentene, 1-heptene, 1-octene, 1-nonene, 1-decene, 1-undecene, and 1-dodecene. Among these, from the viewpoint of imparting flexibility, an $\alpha$-olefin having 3 to 12 carbon atoms is preferable, propylene, 1-butene, and 1-octene are more preferable, and 1-octene is further preferable.

The component (B) according to the present invention usually includes 70 to 99 mol%, preferably 80 to 97 mol%, of the unit derived from ethylene, and 1 to 30 mol%, preferably 3 to 20 mol%, of the unit derived from an $\alpha$-olefin having 3 to 20 carbon atoms (provided that the total content of the unit derived from ethylene and the unit derived from an $\alpha$-olefin having 3 to 20 carbon atoms is 100 mol%). A content proportion of the unit derived from ethylene is preferably in the above range in order to obtain a thermoplastic elastomer composition having excellent mechanical strength.

If necessary, a monomer having an unsaturated bond can be copolymerized with the component (B) according to the present invention. Preferred examples of the monomer having an unsaturated bond include conjugated diolefins such as butadiene and isoprene; non-conjugated diolefins such as 1,4-hexadiene; cyclic diene compounds such as dicyclopentadiene and a norbornene derivative; and acetylenes. Among these, ethylidene norbornene (ENB) and dicyclopentadiene (DCP) are more preferable from the viewpoint of flexibility.

The component (B) according to the present invention usually has an MFR (ASTM D1238 at a load of 2.16 kg, a temperature of 190°C) in the range of 0.1 to 20 g/10 min and preferably 0.3 to 10 g/10 min.

This range of MFR ensures that the thermoplastic elastomer composition has a better balance between flowability and mechanical strength.

The component (B) according to the present invention usually has a density in the range of 0.8 to 0.9 g/cm$^3$.

The component (B) according to the present invention can be produced using a known polymerization catalyst, for example, a Ziegler-Natta catalyst, a vanadium catalyst, or a metallocene catalyst. The polymerization method is not particularly limited, and polymerization can be performed by liquid-phase polymerization methods such as solution polymerization, suspension polymerization, and bulk polymerization, gas-phase polymerization methods, or other known polymerization methods. These copolymers are not limited as long as they exhibit the effects of the present invention, which are also available as commercial products. Examples of the commercially available products include trade name ENGAGE 8842 (ethylene-1-octene copolymer) manufactured by The Dow Chemical Company; Vistalon (registered trademark) manufactured by ExxonMobil Chemical Company; ESPRENE (registered trademark) manufactured by Sumitomo Chemical Co., Ltd.; and MITSUI EPT (registered trademark), TAFMER P (registered trademark), and TAFMER A (registered trademark) manufactured by Mitsui Chemicals, Inc.

<Softener (C)>

A softener (C) (hereinafter sometimes referred to as a "component (C)"), one of the components of the thermoplastic elastomer composition of the present invention, is not particularly limited, but a plasticizer usually used for rubber can be used. From the viewpoint of compatibility with, for example, the propylene polymer (A) and the ethylene/α-olefin copolymer (B), process oils composed of, for example, paraffinic hydrocarbon, naphthenic hydrocarbon, and aromatic hydrocarbon are preferable. Among these components (C), paraffinic hydrocarbon-based process oils are preferable from the viewpoint of weatherability and coloring properties, and naphthenic hydrocarbon-based process oils are preferable from the viewpoint of compatibility. From the viewpoint of thermal stability and photostability, the content of the aromatic hydrocarbon in the process oil is preferably 10% or less, more preferably 5% or less, and even more preferably 1% or less in a ratio of carbon atoms specified by ASTM D2140-97.

<Hydrogenated product (D) of block copolymer>

A hydrogenated product (D) of a block copolymer (hereinafter sometimes referred to as a "component (D)" or a "hydrogenated product (D)"), one of the components of the thermoplastic elastomer composition of the present invention, is a hydrogenated product of a block copolymer including at least one block mainly including a conjugated diene monomer unit and at least one block mainly including a vinyl aromatic monomer unit.

The component (D) according to the present invention includes a monomer unit derived from the conjugated diene monomer, at least a part of which is hydrogenated (hereinafter sometimes referred to as "hydrogenation").

Here the "vinyl aromatic monomer unit" means a constituent unit of a polymer resulting from polymerization of a vinyl aromatic compound as a monomer, and the structure is a molecule structure in which two carbon atoms in a substituted ethylene group derived from a substituted vinyl group are bonding sites. The "conjugated diene monomer unit" means a constituent unit of a polymer resulting from polymerization of conjugated diene as a monomer, and the structure is a molecule structure in which two carbon atoms in olefin derived from the conjugated diene monomer are bonding sites.

In the component (D) according to the present invention, the expression "mainly including" indicates that the copolymer block includes 50% by mass or more, preferably 60% by mass or more, and more preferably 80% by mass or more of the monomer unit derived from the conjugated diene monomer (or the vinyl aromatic monomer) in the copolymer block. For example, the block mainly including a conjugated diene monomer unit means that the block includes 50% by mass or more, preferably 60% by mass or more, and more preferably 80% by mass or more of the monomer unit derived from the conjugated diene monomer in the block.

The vinyl aromatic monomer in the component (D) according to the present invention is not particularly limited, and examples thereof include vinyl aromatic compounds such as styrene, α-methylstyrene, p-methylstyrene, divinylbenzene, 1,1-diphenylethylene, N,N-dimethyl-p-aminoethylstyrene, and N,N-diethyl-p-aminoethylstyrene. These may be used singly or in combinations of two or more thereof. Among these, styrene is preferable from the viewpoint of economy.

The conjugated diene monomer in the component (D) according to the present invention is a diolefin having a pair of conjugated double bonds, and examples thereof include 1,3-butadiene (butadiene), 2-methyl-1,3-butadiene (isoprene), 2,3-dimethyl-1,3-butadiene, 1,3-pentadiene, 2-methyl-1,3-pentadiene, and 1,3-hexadiene. Among these, butadiene and isoprene are preferable from the viewpoint of economy. These may be used singly or in combinations of two or more thereof.

Arrangement of each block in the component (D) according to the present invention is not particularly limited, and any suitable arrangement can be adopted as appropriate. For example, in the case where S denotes a polymer block composed of the vinyl aromatic monomer units, and B denotes a polymer block composed of the conjugated diene monomer units, at least a part of which is hydrogenated, examples of the hydrogenated product of the block copolymer include a linear block copolymer represented by SB, $S(BS)_{n1}$ (where n1 is an integer of 1 to 3), $S(BSB)_{n2}$ (where n2 is an integer of 1 to 2), and copolymer represented by $(SB)_{n3}X$ (where n3 is an integer of 3 to 6; and X denotes a residue of a coupling agent such as silicon tetrachloride, tin tetrachloride, and a polyepoxy compound). Among these, linear block copolymers of an SB 2-block type (diblock), an SBS 3-block type (triblock), and an SBSB 4-block type (tetrablock) are preferable.

Here, the polymer block B may be a polymer block consisting of conjugated diene monomer units alone or a polymer block mainly including a conjugated diene monomer unit and including a vinyl aromatic monomer unit (a copolymer of the conjugated diene monomer unit and the vinyl aromatic monomer unit), and at least a part of the conjugated diene monomer units in either polymer block is hydrogenated.

The content of the vinyl aromatic monomer unit in the component (D) according to the present invention is 30 to 80% by mass, and from the viewpoint of heat resistance and dispersibility, preferably 40 to 80% by mass, and more preferably 50 to 70% by mass. If the content of the vinyl aromatic monomer unit is 30% by mass or more, the mechanical physical properties can be further improved. If the content of the vinyl aromatic monomer unit is 80% by mass or less, low temperature properties can be further improved.

The content of the vinyl aromatic monomer unit in the component (D) according to the present invention can be measured by nuclear magnetic resonance spectrometry (NMR).

The content of the vinyl aromatic monomer unit block in the component (D) according to the present invention is preferably 10% by mass or more, and more preferably 10 to 40% by mass from the viewpoint of mechanical strength. Here, the content of the vinyl aromatic compound polymer block in the component (D) is defined by the following expression using the mass of the vinyl aromatic compound polymer block (where a vinyl aromatic compound polymer having an average polymerization degree of about 30 or less is excluded) obtained by a method of decomposing a copolymer before hydrogenation through oxidation using osmium tetroxide as a catalyst with tert-butyl hydroperoxide (the method described in I. M. Kolthoff, et al., J. Polym. Sci. 1, 429 (1946), and hereinafter, also referred to as an "osmium tetroxide decomposition method"):

```
Content of the vinyl aromatic compound polymer block (%

by mass) = (mass of vinyl aromatic compound polymer block in

copolymer before hydrogenation/mass of copolymer before

hydrogenation) × 100
```

In the case where a plurality of polymer blocks is present in the component (D) according to the present invention, structural features such as the molecular weight and composition of the blocks may be the same or different from each other. For example, the hydrogenated copolymer block including the conjugated diene monomer unit and the vinyl aromatic monomer unit, and the hydrogenated copolymer block mainly including the conjugated diene monomer unit, may be present in the component (D). The boundary between the blocks and the end of the block may not always need to be clearly distinguished. The aspect of distribution of the vinyl aromatic monomer unit in the respective polymer blocks is not particularly limited and may be uniformly distributed or distributed in a tapered manner, in a step manner, in a projected manner, or in a depressed manner. Moreover, a crystalline portion may be present in the polymer block.

The aspect of the distribution of the vinyl unit of the conjugated diene monomer unit in the respective polymer block in the component (D) according to the present invention is not particularly limited, and for example, the distribution may be lopsided. Examples of a method for controlling distribution of the vinyl unit include a method of adding a vinylating agent during polymerization and a method of changing a polymerization temperature. The conjugated diene monomer unit may have lopsided distribution of the hydrogenation rate. The distribution of the hydrogenation rate can be controlled by a method of changing distribution of the vinyl unit or by a method of utilizing the difference in the hydrogenation speed between an isoprene unit and a butadiene unit when a copolymer obtained by copolymerizing isoprene and butadiene is hydrogenated using a hydrogenation catalyst described later.

In the component (D) according to the present invention, preferably 75 mol% or more, more preferably 85 mol% or more, and even more preferably 97 mol% or more, of unsaturated bonds included in the conjugated diene monomer unit before hydrogenation is hydrogenated, from the viewpoint of heat resistance, aging resistance, and weatherability.

The hydrogenation catalyst used for hydrogenation is not particularly limited, and conventionally known catalysts can be used:

(1) supported heterogeneous hydrogenation catalysts in which a metal such as Ni, Pt, Pd, and Ru is supported on, for example, carbon, silica, alumina, and diatomaceous earth;

(2) so-called Ziegler-type hydrogenation catalysts using an transition metal salt, such as an organic acid salt and an acetylacetone salt of, for example, Ni, Co, Fe, and Cr, and a reducing agent, such as organic aluminum; and

(3) homogeneous hydrogenation catalysts such as organic metal complexes of organic metal compounds of, for example, Ti, Ru, Rh, and Zr.

Specific examples of the hydrogenation catalyst include hydrogenation catalysts described in Japanese Patent Publication Nos. 42-008704, 43-006636, 63-004841, 01-037970, 01-053851, and 02-009041. Among these, examples of preferred hydrogenation catalysts include reducing organic metal compounds such as a titanocene compound.

As the titanocene compound, compounds described in JP08-109219A can be used, for example. Specific examples thereof include compounds having at least one or more ligand having a (substituted) cyclopentadienyl skeleton such as biscyclopentadienyltitanium dichloride and monopentamethylcyclopentadienyltitanium trichloride, an indenyl skeleton, or a fluorenyl skeleton.

Examples of the reducing organic metal compound include an organic alkali metal compound of, for example, organic lithium, an organic magnesium compound, an organic aluminum compound, an organic boron compound, and an organic zinc compound.

A method of polymerizing a block copolymer before hydrogenation in the component (D) according to the present invention is not particularly limited, and a known method can also be used. Examples thereof include methods described in Japanese Patent Publication Nos. 36-019286, 43-017979, 46-032415, 49-036957, 48-002423, 48-004106, and 56-028925, JP59-166518A, and JP60-186577A.

If necessary, the component (D) may have a polar group. Examples of the polar group include a hydroxy group, a carboxyl group, a carbonyl group, a thiocarbonyl group, an acid halide group, an acid anhydride group, a thiocarboxylic acid group, an aldehyde group, a thioaldehyde group, a carboxylic acid ester group, an amide group, a sulfonic acid group, a sulfonic acid ester group, a phosphorus acid group, a phosphorus acid ester group, an amino group, an imino group, a nitrile group, a pyridyl group, a quinoline group, an epoxy group, a thioepoxy group, a sulfide group, an isocyanate group, an isothiocyanate group, a halogenated silicon group, an alkoxysilicon group, a halogenated tin group, a boronic acid group, a boron containing group, a boronic acid salt group, an alkoxytin group, and a phenyltin group.

In the block copolymer before hydrogenation in the component (D) according to the present invention, the content of the vinyl bond in the conjugated diene monomer unit is preferably 5 mol% or more from the viewpoint of flexibility and scratch resistance, and preferably 70 mol% or less from the viewpoint of productivity, elongation at break, and scratch resistance. The content of the vinyl bond in the conjugated diene monomer unit is more preferably 10 to 50 mol%, even more preferably 10 to 30 mol%, and still more preferably 10 to 25 mol%.

As used herein, the content of the vinyl bond means the proportion of the conjugated diene before hydrogenation integrated in the bonding modes of 1,2-bond and 3,4-bond among the one integrated in the bonding modes of 1,2-bond, 3,4-bond, and 1,4-bond. The content of the vinyl bond can be measured by NMR.

The weight-average molecular weight of the component (D) before crosslinking is not particularly limited but is preferably 50,000 or more from the viewpoint of scratch resistance, preferably 400,000 or less, and more preferably 50,000 to 300,000 from the viewpoint of forming flowability. The molecular weight distribution (Mw/Mn: weight-average molecular weight /number-average molecular weight) is not particularly limited but is preferably a value close to 1 from the viewpoint of scratch resistance. The weight-average molecular weight and the number-average molecular weight can be determined using tetrahydrofuran (1.0 mL/min) as a solvent under the condition of an oven temperature of 40°C by gel permeation chromatography (GPC; manufactured by SHIMADZU Corporation, apparatus name "LC-10") and a column of TSKgelGMHXL (4.6 mm ID $\times$ 30 cm, two columns). The weight-average molecular weight (Mw), number-average molecular weight (Mn), and the molecular weight distribution (Mw/Mn) are calculated as a molecular weight in terms of polystyrene.

It is preferable that the block mainly including the conjugated diene monomer unit in the component (D) according to the present invention is a copolymer block mainly including a conjugated diene monomer unit and including a vinyl aromatic monomer unit from the viewpoint of wear resistance.

The component (D) according to the present invention is not particularly limited, and the conjugated diene monomer and the vinyl aromatic monomer can be used. Among these, from the viewpoint of the balance between mechanical strength and impact resistance, examples of a preferred combination thereof include a block including a butadiene unit and a styrene unit and a block including an isoprene unit and a styrene unit.

The component (D) according to the present invention may mainly include at least a conjugated diene monomer unit, and the content of each monomer is not particularly limited. In particular, from the viewpoint of the balance between mechanical strength and impact resistance, the content of the vinyl aromatic monomer unit in the copolymer block is preferably 10% by mass or more and less than 50% by mass, and more preferably 20% by mass or more and less than 50% by mass.

<Polyorganosiloxane (E)>

The structure of a polyorganosiloxane (E) (hereinafter sometimes referred to as a component (E)"), one of the components that may be contained in the thermoplastic elastomer composition of the present invention, is not particularly limited but is preferably a linear, branched, or crosslinking polymer structure from the viewpoint of wear resistance and feeling by touch.

The component (E) according to the present invention is not particularly limited, and a known component can also be used. Preferred polyorganosiloxane is a polymer including a siloxane unit having a substituent such as an alkyl group, a vinyl group, and an aryl group. Among these, particularly, polyorganosiloxane having an alkyl group is preferable, and polyorganosiloxane having a methyl group is more preferable.

Specific examples of the polyorganosiloxane having a methyl group include polydimethylsiloxane, polymethylphenylsiloxane, and polymethylhydrogensiloxane. Among these, polydimethylsiloxane is preferable.

The kinematic viscosity of the component (E) according to the present invention is not particularly limited. From the viewpoint of wear resistance and scratch resistance, the kinematic viscosity (25°C) specified in JIS Z8803 is preferably 5,000 centi stokes (cSt) or more. The kinematic viscosity of the component (E) is preferably less than 3,000,000 cSt because dispersibility of the component (E) in the resulting thermoplastic elastomer composition tends to be improved, the appearance is good, and stability in quality during melt extrusion tends to be further improved. The kinematic viscosity of the component (E) is more preferably 10,000 cSt or more and less than 3,000,000 cSt, and even more preferably 50,000 cSt or more and less than 3,000,000 cSt.

<Thermoplastic elastomer composition>

The thermoplastic elastomer composition of the present invention contains the propylene polymer (A); and contains, based on 100 parts by mass of the propylene polymer (A), 50 to 300 parts by mass, preferably 50 to 250 parts by mass, and more preferably 50 to 200 parts by mass of the ethylene/$\alpha$-olefin copolymer (B) from the viewpoint of flexibility and scratch resistance, 50 to 280 parts by mass, preferably 60 to 280 parts by mass, and more preferably 80 to 280 parts by mass of the softener (C) from the viewpoint of formability and heat resistance, and 90 to 400 parts by mass, preferably 95 to 350 parts by mass, and more preferably 100 to 280 parts by mass of the hydrogenated product (D) of the block copolymer from the viewpoint of formability and scratch resistance.

The thermoplastic elastomer composition of the present invention preferably contains 2 to 30 parts by mass, more preferably 2 to 25 parts by mass, and even more preferably 2 to 20 parts by mass of the polyorganosiloxane (E) per 100 parts by mass of the propylene polymer (A), in addition to the component (B), the component (C), and the component (D).

When the amount of the polyorganosiloxane (E) blended is 2 parts by mass or more, the effect of improving scratch resistance is sufficiently exhibited, and when the amount is 30 parts by mass or less, the dispersibility in the thermoplastic elastomer composition is excellent. In the thermoplastic elastomer composition of the present invention, the mass ratio (C/B) of the softener (C) to the ethylene/$\alpha$-olefin copolymer (B) is preferably more than 0 and less than 3, more preferably 0.6 to 2.8, and even more preferably 0.7 to 2.5 from the viewpoint of formability and scratch resistance.

The thermoplastic elastomer composition of the present invention preferably contains, if necessary, an organic peroxide (F) (hereinafter sometimes referred to as a "component (F)") below.

The component (F) according to the present invention acts as, for example, a crosslinking initiator for the components (A), (B) and (D), which are components of the thermoplastic elastomer composition of the present invention, by dynamically heat-treating the thermoplastic elastomer composition of the present invention.

<Organic peroxide (F)>

Specific examples of the organic peroxide (F) include peroxyketals such as 1,1-bis(t-butylperoxy)-3,3,5-trimethylcyclohexane, 1,1-bis(t-hexylperoxy)-3,3,5-trimethylcyclohexane, 1,1-bis(t-hexylperoxy)cyclohexane, 1,1-bis(t-butylperoxy)cyclododecane, 1,1-bis(t-butylperoxy)cyclohexane, 2,2-bis(t-butylperoxy)octane, n-butyl-4,4-bis(t-butylperoxy)butane, and n-butyl-4,4-bis(t-butylperoxy)valerate; dialkyl peroxides such as di-t-butyl peroxide, dicumyl peroxide, t-butylcumyl peroxide, $\alpha,\alpha$'-bis(t-butylperoxy-m-isopropyl)benzene, $\alpha,\alpha$'-bis(t-butylperoxy)diisopropylbenzene, 2,5-dimethyl-2,5-bis(t-butylperoxy)hexane, and 2,5-dimethyl-2,5-bis(t-butylperoxy)hexyne-3; diacyl peroxides such as acetyl peroxide, isobutyryl peroxide, octanoyl peroxide, decanoyl peroxide, lauroyl peroxide, 3,5,5-trimethylhexanoyl peroxide, benzoyl peroxide, 2,4-dichlorobenzoyl peroxide, and m-tolyoyl peroxide; peroxyesters such as t-butyl peroxyacetate, t-butyl peroxyisobutyrate, t-butyl peroxy-2-ethylhexanoate, t-butyl peroxylaurylate, t-butyl peroxybenzoate, di-t-butyl peroxyisophthalate, 2,5-dimethyl-2,5-di(benzoylperoxy)hexane, t-butyl peroxymaleic acid, t-butyl peroxyisopropyl carbonate, and cumyl peroxyoctate; and hydroperoxides such as t-butyl hydroperoxide, cumene hydroperoxide, diisopropylbenzene hydroperoxide, 2,5-dimethylhexane-2,5-dihydroperoxide, and 1,1,3,3-tetramethylbutyl peroxide.

Among these components (F), 1,1-bis(t-butylperoxy)-3,3,5-trimethylcyclohexane, di-t-butyl peroxide, dicumyl peroxide, 2,5-dimethyl-2,5-bis(t-butylperoxy)hexane, and 2,5-dimethyl-2,5-bis(t-butylperoxy)hexyne-3 are preferable from the viewpoint of, for example, thermal decomposition temperature and crosslinking performance.

These may be used singly or in combinations of two or more thereof as the component (F) according to the present invention.

When the thermoplastic elastomer composition of the present invention contains the component (F), the content thereof is preferably 2 to 6 parts by mass, and more preferably 2 to 4 parts by mass per 100 parts by mass of the component (A), from the viewpoint of forming flowability.

When the thermoplastic elastomer composition of the present invention contains the component (F), it is preferable to use a crosslinking auxiliary agent below in combination.

<Crosslinking auxiliary agent>

Examples of the crosslinking auxiliary agent according to the present invention include various known crosslinking auxiliary agents, specifically, a monofunctional monomer and a polyfunctional monomer. Such a crosslinking auxiliary agent can control the rate of crosslinking reaction.

Examples of the monofunctional monomer preferably include a radically polymerizable vinyl monomer and include an aromatic vinyl monomer, an unsaturated nitrile monomer such as acrylonitrile and methacrylonitrile, an acrylic acid ester monomer, a methacrylic acid ester monomer, an acrylic acid monomer, a methacrylic acid monomer, a maleic anhydride monomer, and an N-substituted maleimide monomer.

Specific examples of the monofunctional monomer include styrene, methylstyrene, chloromethylstyrene, hydroxystyrene, tert-butoxystyrene, acetoxystyrene, chlorostyrene, acrylonitrile, methacrylonitrile, methyl acrylate, ethyl acrylate, n-butyl acrylate, isobutyl acrylate, methyl methacrylate, ethyl methacrylate, n-butyl methacrylate, isobutyl methacrylate, 2-ethylhexyl methacrylate, maleic anhydride, methylmaleic anhydride, 1,2-dimethylmaleic anhydride, ethylmaleic anhydride, phenylmaleic anhydride, N-methylmaleimide, N-ethylmaleimide, N-cyclohexylmaleimide, N-laurylmaleimide, and N-cetylmaleimide. Among these, styrene, acrylonitrile, methacrylonitrile, methyl acrylate, maleic anhydride, and N-methylmaleimide are preferable from the viewpoint of easiness of the reaction and general versatility. These monofunctional monomers may be used singly or in combinations of two or more thereof.

The polyfunctional monomer is a monomer having a plurality of radically polymerizable functional groups as the functional group, and a monomer having a vinyl group is preferable. The number of the functional group in the polyfunctional monomer is preferably 2 or 3.

Specific examples of the polyfunctional monomer preferably include divinylbenzene, triallyl isocyanurate, triallyl cyanurate, diacetone diacrylamide, polyethylene glycol diacrylate, polyethylene glycol dimethacrylate, trimethylolpropane trimethacrylate, trimethylolpropane triacrylate, ethylene glycol dimethacrylate, triethylene glycol dimethacrylate, diethylene glycol dimethacrylate, diisopropenyl benzene, p-quinone dioxime, p,p'-dibenzoyl quinone dioxime, phenyl maleimide, allyl methacrylate, N,N'-m-phenylene bismaleimide, diallyl phthalate, tetraallyl oxyethane, and 1,2-polybutadiene, and divinylbenzene and triallylisocyanurate are more preferable. These polyfunctional monomers may be used singly or in combinations of two or more thereof.

When the thermoplastic elastomer composition of the present invention contains a crosslinking auxiliary agent, the content is 1 to 100 parts by mass, and preferably 1 to 50 parts by mass per 100 parts by mass of the component (F).

<Method for producing thermoplastic elastomer composition and physical property>

Dynamic crosslinking of the thermoplastic elastomer composition of the present invention provides crosslinking of at least a part of the component (A), the component (B), and the component (D) contained in the thermoplastic elastomer composition. When the dynamic crosslinking is performed, dynamic heat treatment is preferably performed in the presence of the component (F) or in the presence of the component (F) and the crosslinking auxiliary agent.

In the present invention, the expression "dynamic heat treatment" refers to kneading in a molten state.

Note that the thermoplastic elastomer composition of the present invention before dynamic heat treatment is also referred to as a "composition 1", and the composition which is dynamically heat-treated is also referred to as a "composition 2".

The dynamic heat treatment in the present invention is preferably performed in a non-open apparatus and in an inert gas atmosphere such as nitrogen or carbon dioxide. The temperature of the heat treatment ranges from the melting point of the component (A) to 300°C, and is usually 150 to 270°C, and preferably 170 to 250°C. The kneading time is usually 1 to 20 minutes, and preferably 1 to 10 minutes. The shear force to be applied, in terms of the shear velocity, is usually in the range of 10 to 50,000 s$^{-1}$, and preferably of 100 to 10,000 s$^{-1}$.

The Shore A hardness (value at 10 seconds) (in accordance with the measurement method of JIS K 6253) of the composition 2 is preferably 30 to 75, more preferably 40 to 73, and even more preferably 50 to 70.

When the Shore A hardness (value at 10 seconds) of the composition 2 is in the above range, a molded body with design properties, such as tactile sensation and high-class appearance, and scratch resistance can be easily formed.

Specifically, the Shore A hardness (value at 10 seconds) can be measured by a method described in Examples below.

The melt flow rate (in accordance with the measurement method of JIS K 7210, 230°C, 1.2 kg load) of the composition 2 is preferably 0.1 to 100 g/10 min, more preferably 5 to 90 g/10 min, and even more preferably 10 to 80 g/10 min, from the viewpoint of, for example, obtaining a composition with excellent formability.

The thermoplastic elastomer composition according to the present invention can further contain an inorganic filler, a plasticizer, and other additives, in addition to, for example, the component (A).

Examples of the inorganic filler include calcium carbonate, magnesium carbonate, silica, carbon black, glass fiber, titanium oxide, clay, mica, talc, magnesium hydroxide, and aluminum hydroxide.

Examples of the plasticizer include polyethylene glycol and phthalic acid ester such as dioctyl phthalate (DOP).

Examples of the other additives include organic and inorganic pigments such as carbon black, titanium dioxide, and phthalocyanine black; heat stabilizers such as 2,6-di-t-butyl-4-methylphenol and n-octadecyl 3-(3,5'-di-t-butyl-4-hydroxyphenyl)propionate; antioxidants such as tris(nonylphenyl)phosphite and distearyl pentaerythritol diphosphite; ultraviolet absorbers such as 2-(2'-hydroxy-5'-methylphenyl)benzotriazole and 2,4-dihydroxybenzophenone; light stabilizers such as bis-[2,2,6,6-tetramethyl-4-piperidinyl] sebacate, tetrakis(2,2,6,6-tetramethyl-4-piperidinyl) 1,2,3,4-butanetetracarboxylate; flame retardants such as ammonium polyphosphate, trioctyl phosphate, and magnesium hydroxide; silicone oils such as dimethylsilicone oil and methylphenylsilicone oil; anti-blocking agents such as stearamide and erucamide; foaming agents such as sodium bicarbonate and N,N'-dinitrosopentamethylenetetramine; antistatic agents such as palmitic acid monoglyceride and stearic acid monoglyceride; and antibacterial agents such as silver ion carrying zeolite and thiosulfite silver complexes.

<<Molded body>>

The molded body according to the present invention is not particularly limited as long as it includes the thermoplastic elastomer composition of the present invention, and is molded using any known molding method depending on the application. Examples of such methods include press molding, injection molding, extrusion, calendering, blow molding, vacuum forming, and compression molding. From the viewpoint of productivity and easy formation of a complicated shape, the molded body is preferably an injection molded body molded by an injection molding method.

The thermoplastic elastomer composition of the present invention has low hardness and is flexible with excellent scratch resistance and is not particularly limited in application. As a molded body, for example, the thermoplastic elastomer composition is suitable for various known applications such as automobile parts, civil engineering and building materials, electrical and electronic parts, sanitary goods, films or sheets, foams, and artificial leather. In particular, the thermoplastic elastomer composition can be suitably used for automobile parts such as automobile interior parts and surface materials such as artificial leather.

<Automobile part>

Examples of the automobile parts for which the molded body according to the present invention may be used include weather strips, ceiling materials, interior sheets, bumper moldings, side moldings, air spoilers, air duct hoses, cup holders, side brake grips, shift knob covers, seat adjustment knobs, flapper door seals, wire harness grommets, rack-and-pinion boots, suspension cover boots, glass guides, inner belt line seals, roof guides, trunk lid seals, molded quarter window gaskets, corner moldings, glass encapsulations, hood seals, glass run channels, secondary seals, various packings, bumper parts, body panels, side shields, glass run channels, instrument panel skins, door skins, ceiling skins, weather stripping materials, hoses, steering wheels, boots, wire harness covers, and seat adjuster covers. Among them, the thermoplastic elastomer composition of the present invention is particularly preferable because it can improve the texture and tactile sensation.

<Civil engineering and building material>

Examples of the civil engineering and building material for which the molded body according to the present invention can be used include civil engineering materials and building materials such as soil improvement sheets, water supply plates, and noise prevention walls, various civil engineering and building gaskets and sheets, water sealing materials, joint materials, and building window frames. Among them, the thermoplastic elastomer composition of the present invention is particularly preferable because it can improve the texture and tactile sensation.

<Electrical and electronic part>

Examples of the electrical and electronic components for which the molded body according to the present invention may be used include electrical and electronic components such as an electric wire covering material, a connector, a cap, and a plug. Among them, the thermoplastic elastomer composition of the present invention is particularly preferable because it can improve the texture and tactile sensation.

<Daily necessity>

Examples of daily necessities for which the molded body according to the present invention can be used include sporting goods such as sports shoe soles, ski boots, tennis rackets, bindings for ski plates, bat grips, and miscellaneous goods such as pen grips, toothbrush grips, hairbrushes, fashion belts, various caps, and shoe inner soles. Among them, the thermoplastic elastomer composition of the present invention is particularly preferable because it can improve the texture and tactile sensation.

<Film or sheet>

Examples of the film or sheet for which the molded body according to the present invention can be used include infusion bags, medical containers, automobile interior and exterior materials, beverage bottles, clothing cases, food packaging materials, food containers, retort containers, pipes, transparent substrates, and sealants, and among them, the thermoplastic elastomer composition of the present invention is particularly preferable because it can improve the texture and tactile sensation.

<Artificial leather>

Examples of the artificial leather for which the molded body according to the present invention can be used include chair skins, bags, school bags, sports shoes such as track and field shoes, marathon shoes, and running shoes, wears such as jumpers and coats, belts, pleated belts, ribbons, notebook covers, book covers, key holders, pen cases, wallets, business card holders, and commuter pass holders. Among them, the thermoplastic elastomer composition of the present invention is particularly preferable because it can improve the texture and tactile sensation of the leather.

Examples

Hereinafter, the present invention will be described in more detail with reference to Examples, but the present invention is not limited to these Examples at all.
Test methods for components of raw materials used in Examples and Comparative Examples are as follows.

(1) Hydrogenation rate (%)

The hydrogenation rate was measured by nuclear magnetic resonance spectrometry (NMR). A nuclear magnetic resonance spectrometer (manufactured by JEOL Ltd., apparatus name "JNM-LA400") was used as a measuring apparatus. Deuterated chloroform was used as a solvent. Tetramethylsilane (TMS) was used as a chemical shift reference. Measurements were carried out under conditions of a sample concentration of 50 mg/mL, an observation frequency of 400 MHz, a pulse delay of 2.904 seconds, the number of scans of 64, a pulse width of 45°, and a measurement temperature of 26°C.

(2) Content of monomer unit and content of bond unit

The contents of a vinyl aromatic monomer unit, an ethylene monomer unit, a butylene monomer unit, a 1,4-bond unit in butadiene, a 1,2-bond unit in butadiene, and a 3,4-bond unit in butadiene were each measured by NMR. A nuclear magnetic resonance spectrometer (manufactured by JEOL Ltd., apparatus name "JNM-LA400") was used as a measuring apparatus. Deuterated chloroform was used as a solvent. Tetramethylsilane (TMS) was used as a chemical shift reference. Measurements were carried out under conditions of a sample concentration of 50 mg/mL, an observation frequency of 400 MHz, a pulse delay of 2.904 seconds, the number of scans of 64, a pulse width of 45°, and a measurement temperature of 26°C.

The mass fraction (% by mass) of each constituent unit contained in the component (B) was determined from a measurement value by $^{13}$C-NMR. Specifically, the mass fraction was calculated from a spectrum by $^{13}$C-NMR of the copolymer (B-1) using ECX400P nuclear magnetic resonance apparatus (manufactured by JEOL Ltd.) under conditions of a measurement temperature of 120°C, a measurement solvent of ortho-dichlorobenzene and deuterated benzene at 4:1 (volume ratio), and the number of scans of 8,000.

(3) Content of styrene polymer block (Os value)

The content of the styrene polymer block was measured using the copolymer before hydrogenation according to the method described in I. M. Kolthoff, et al., J. Polym. Sci. 1, 429 (1946) (osmium tetroxide decomposition method). The copolymer before hydrogenation was decomposed using a 0.1 g/125 mL tertiary butanol solution of osmic acid. The content of the styrene polymer block was calculated using the following expression. The content of the styrene polymer block obtained here is referred to as an "Os value".

```
Content of styrene polymer block (Os value; % by mass)

= [(mass of styrene polymer block in copolymer before hydrogenation)/(mass of copolymer before hydrogenation)] ×

100
```

(4) Peak temperature of loss tangent (tan δ)

The peak temperature of the loss tangent (tan δ) was determined by measuring the viscoelastic spectrum using a viscoelastic measurement analyzer (ARES, manufactured by TA Instruments). The measurement was performed under conditions of a strain of 0.1% and a frequency of 1 Hz.

In Examples and Comparative Examples, the following polymers were used.

[Propylene polymer (A)]

The propylene polymer (A-1) used was a propylene homopolymer (homo PP) (trade name: SunAllomer (registered trademark) PL400A, manufactured by SunAllomer Ltd.) with a melt flow rate (MFR) of 2.0 g/10 min under conditions of 230°C and a load of 2.16 kg.

[Ethylene/α-olefin copolymer (B)]

An ethylene-1-octene copolymer (manufactured by The Dow Chemical Company, trade name "ENGAGE 8842") was used as an ethylene/α-olefin copolymer (B-1). The content of ethylene in the copolymer was 55% by mass, the content of octene was 45% by mass, and MFR measured under conditions of a temperature of 190°C and a load of 2.16 kg was 1.0 g/10 min.

[Softener (C)]

Paraffinic oil (manufactured by Idemitsu Kosan Co., Ltd., trade name "Diana Process Oil PW-100") was used as a softener (C-1).

[Hydrogenated product (D) of block copolymer]

The hydrogenated product (D) of the block copolymer used was a hydrogenated product of the block copolymer produced by the method described below.

[Production of hydrogenated product (D-1) of block copolymer]

(1) Preparation of hydrogenation catalyst

The hydrogenation catalyst used for the hydrogenation reaction of the block copolymer was prepared by the following method: A reaction vessel purged with nitrogen was charged with 1 L of dried and purified cyclohexane, 100 mmol of bis(cyclopentadienyl)titanium dichloride was added. With sufficient stirring, an n-hexane solution containing 200 mmol of trimethylaluminum was added to make a reaction at room temperature for about three days.

(2) Production of hydrogenated product of block copolymer

Batch polymerization was performed using a tank reactor with a jacket and a stirrer having an inner volume of 10 L. First, 6.4 L of cyclohexane and 75 g of styrene were added. TMEDA was added in advance such that the molar number of TMEDA was 0.25 times mol the molar number of Li in n-butyllithium and n-butyllithium initiator was added such that the molar number of Li in the n-butyllithium initiator was 10 mmol. The polymerization was performed at an initial temperature of 65°C. After completion of the polymerization, a cyclohexane solution containing 470 g of butadiene and 380 g of styrene (monomer concentration: 22% by mass) was continuously fed to the reactor at a constant rate over 60 minutes. After the completion of the polymerization, a cyclohexane solution containing 75 g of styrene (monomer concentration: 22% by mass) was further added over 10 minutes to obtain a copolymer (D-1').

In the obtained copolymer (D-1'), the styrene content was 53% by mass, and the content of the styrene polymer block was 15% by mass. In the copolymer block (i.e., copolymer block containing the conjugated diene monomer unit and the vinyl aromatic monomer unit), the styrene content was 45% by mass, the butadiene content was 55% by mass, and the content of the vinyl bond was 23%.

To the obtained copolymer (D-1') was added the hydrogenation catalyst at 100 ppm in terms of titanium based on 100 parts by mass of the polymer to perform a hydrogenation reaction at a hydrogen pressure of 0.7 MPa and a temperature of 75°C. To the resulting polymer solution was added 0.3 parts by mass of octadecyl-3-(3,5-di-t-butyl-4-hydroxyphenyl)propionate as a stabilizer per 100 parts by mass of the hydrogenated product of the block copolymer, thereby obtaining a hydrogenated product (D-1) of the block copolymer.

The obtained hydrogenated product (D-1) of the block copolymer had a weight average molecular weight of 160,000. The hydrogenation rate of double bonds in butadiene contained in the hydrogenated product (D-1) of the block copolymer was 99%. In addition, one of the tan $\delta$ peaks obtained by viscoelastic measurements was present at -15°C.

[Polyorganosiloxane (E)]

The polyorganosiloxane (E-1) used was a master batch composed of 50% by mass of dimethylsiloxane and 50% by mass of polypropylene (trade name "MB50 - 001", manufactured by DuPont Toray Specialty Materials, K.K.).

[Organic peroxide (F)]

The organic peroxide (F) used was a mixture of the following organic peroxide and the following crosslinking auxiliary agent:

Organic peroxide: 100 parts by mass of 2,5-dimethyl-2,5-bis(t-butylperoxy)hexane (manufactured by NOF Corporation, trade name "PERHEXA 25B")
Crosslinking auxiliary agent: 15 parts by mass of divinylbenzene (manufactured by Wako Pure Chemical Industries, Ltd.; hereinafter, referred to as "DVB")

<Example 1>

<Production of composition>

An extruder used was a twin screw extruder having an oil inlet port in a central portion of a barrel (30 mm$\varphi$, L/D = 74; manufactured by KOBE STEEL, LTD., "KTX-30"). The screw was a double start screw having a kneading portion before and after an inlet port. The raw materials listed in Table 1 other than the softener were mixed in batch in the composition ratio (parts by mass ratio) shown in Table 1. Then, the mixed raw material was introduced into a twin screw extruder (a cylinder temperature of 200°C) by a constant volume feeder. Subsequently, an amount of the softener shown in Table 1 was injected by a pump from the inlet port located in the central portion of the extruder. The obtained kneaded product was subjected to melt extrusion to obtain a thermoplastic elastomer composition.

<Production of injection molded body>

An injection molding machine used was the "M150CL-DM", manufactured by The Japan Steel Works Meiki Plant (formerly Meiki Co., Ltd.). In the molding condition, the temperature of the resin was 220°C, and the temperature of the metal mold was 40°C. The thermoplastic elastomer composition obtained above was injection-molded using a flat metal mold to prepare injection molded samples. The flat metal mold had a size of 15 cm (length) $\times$ 9 cm (width) and had been subjected to a leather texture finish (average arithmetic roughness Ra = 20 $\mu$m).

The physical properties of the obtained thermoplastic elastomer composition and injection molded samples were evaluated by the following methods. Table 1 shows the results.

(1) MFR (g/10 min)

The melt flow rate of the thermoplastic elastomer composition obtained above was measured in accordance with JIS K7120 under conditions of 230°C and a load of 1.2 kg. Samples for which the MFR could not be measured because the MFR was either too high or too low were considered unmeasurable.

(2) Measurement of Shore A hardness

A pressed sheet with a thickness of 2 mm was prepared from the thermoplastic elastomer composition obtained above, and a laminated sheet with a thickness of 6 mm obtained by stacking three of these pressed sheets was used as a measurement sample.

The measurement sample obtained above was measured with a Shore A hardness tester in accordance with JIS K6253. The value read 10 seconds after the pressure plate was brought into contact with the test sample was used as the Shore A hardness (value at 10 seconds).

(3) Scratch resistance

Ten scratches were made on the injection-molded samples obtained above in each of the vertical and horizontal directions using a pencil-type scratch hardness tester (manufactured by Erichsen, 318/318S No. 2) under a load of 10 N. The evaluation was made by visually observing the scratches in the central lattice area. The evaluation was based on the following criteria:

A: Almost no change in appearance observed due to scratches.
B: Slight change in appearance observed due to scratches.
C: Change in appearance observed due to scratches.
D: Significant change in appearance observed due to scratches.

(4) Flexibility (hardness/softness)

Flexibility (hardness/softness) was evaluated based on the following criteria when the surface of the injection molded product sample obtained above was pressed with a finger. The flexibility (hardness/softness) evaluation was performed by three people, and the evaluation results were unanimous.

A: Good (Soft feeling. The surface deformation can be clearly felt when pressed with a finger.)
B: Slightly poor (Slightly hard. The surface deformation can be slightly felt when pressed with a finger.)
C: Poor (Hard feeling. The surface deformation cannot be felt at all when pressed with a finger.)

<Examples 2 to 4 and Comparative Examples 1 to 6>

Samples were prepared and evaluated in the same manner as in Example 1, except that the raw materials used were changed to the formulations listed in Table 1. Table 1 shows the results.
Note that in Comparative Example 4, the MFR was too low to obtain an injection molded body. Therefore, it was impossible to evaluate the scratch resistance and flexibility of the injection molded samples.

[Table 1]

Table 1

| | Formula | | Example 1 | Example 2 | Example 3 | Example 4 | Comparative Example 1 |
|---|---|---|---|---|---|---|---|
| Composition | Component (A) | Parts by mass | 100 | 100 | 100 | 100 | 100 |
| | Component (B) | Parts by mass | 143 | 140 | 143 | 122 | 152 |
| | Component (C) | Parts by mass | 143 | 260 | 143 | 149 | 152 |
| | Component (D) | Parts by mass | 243 | 260 | 129 | 108 | 15 |
| | Component (E) | Parts by mass | 14 | 16 | 11 | 11 | 9 |
| | Component (F) | Parts by mass | 3 | 4 | 3 | 3 | 3 |
| | Component (C)/ Component (B) | | 1.00 | 1.86 | 1.00 | 1.22 | 1.00 |
| Evaluation | Shore A hardness (value at 10 seconds) | | 66 | 57 | 65 | 64 | 68 |
| | MFR (230°C, 1.2 kgf) | g/10 min | 10 | 30 | 15 | 25 | 54 |
| | Scratch resistance | | A | B | B | B | D |
| | Flexibility | | A | A | A | A | A |

| | Formula | | Comparative Example 2 | Comparative Example 3 | Comparative Example 4 | Comparative Example 5 | Comparative Example 6 |
|---|---|---|---|---|---|---|---|
| Composition | Component (A) | Parts by mass | 100 | 100 | 100 | 100 | 100 |
| | Component (B) | Parts by mass | 143 | 82 | 333 | 44 | 89 |
| | Component (C) | Parts by mass | 143 | 35 | 333 | 178 | 133 |
| | Component (D) | Parts by mass | 0 | 147 | 567 | 111 | 67 |
| | Component (E) | Parts by mass | 9 | 6 | 33 | 11 | 9 |
| | Component (F) | Parts by mass | 3 | 2 | 7 | 2 | 2 |
| | Component (C)/ Component (B) | | 100 | 0.43 | 100 | 4.00 | 150 |
| Evaluation | Shore A hardness (value at 10 seconds) | | 69 | 78 | 55 | 68 | 70 |
| | MFR (230°C, 1.2 kgf) | g/10 min | 79 | 35 | Unmeasurable | 90 | 65 |
| | Scratch resistance | | D | B | Not evaluable | D | D |
| | Flexibility | | A | C | Not evaluable | A | B |

<Evaluation result>

As shown in Table 1, it can be understood that injection molded bodies obtained from the thermoplastic elastomer compositions of Examples 1 to 4 are excellent in flowability, flexibility, and scratch resistance while having low hardness.

On the other hand, in Comparative Examples 1, 2, 5, and 6, molded bodies with good scratch resistance could not be obtained. In Comparative Example 3, the hardness was so high that a molded body with good flexibility that satisfies the required performance could not be obtained. In Comparative Example 4, the MFR was too low to obtain an injection molded body.

**Claims**

1. A thermoplastic elastomer composition comprising (A) to (D) below:

   (A) 100 parts by mass of a propylene polymer;
   (B) 50 to 300 parts by mass of an ethylene/$\alpha$-olefin copolymer including units of ethylene and $\alpha$-olefin having 3 to 20 carbon atoms;
   (C) 50 to 280 parts by mass of a softener; and
   (D) 90 to 400 parts by mass of a hydrogenated product of a block copolymer comprising at least one block mainly including a conjugated diene monomer unit and at least one block mainly including a vinyl aromatic monomer unit.

2. The thermoplastic elastomer composition according to claim 1, comprising (E) 2 to 30 parts by mass of polyorganosiloxane.

3. The thermoplastic elastomer composition according to claim 1 or 2, wherein a mass ratio of the (C) to the (B), C/B, is more than 0 and less than 3.

4. The thermoplastic elastomer composition according to any one of claims 1 to 3, wherein the block mainly including a conjugated diene monomer unit in the (D) is a copolymer block mainly including a conjugated diene monomer unit and including a vinyl aromatic monomer unit.

5. The thermoplastic elastomer composition according to any one of claims 1 to 4, which is dynamically heat-treated.

6. The thermoplastic elastomer composition according to any one of claims 1 to 5, wherein at least a part of the (B) is crosslinked.

7. An injection molded body comprising the thermoplastic elastomer composition according to any one of claims 1 to 6.

8. An automobile interior part comprising the injection molded body according to claim 7.

## INTERNATIONAL SEARCH REPORT

| International application No. |
| --- |
| **PCT/JP2022/003164** |

### A. CLASSIFICATION OF SUBJECT MATTER

*C08K 5/01*(2006.01)i; *C08L 23/08*(2006.01)i; *C08L 23/12*(2006.01)i; *C08L 53/02*(2006.01)i; *C08L 83/04*(2006.01)i
FI:   C08L23/12; C08K5/01; C08L23/08; C08L53/02; C08L83/04

According to International Patent Classification (IPC) or to both national classification and IPC

### B. FIELDS SEARCHED

Minimum documentation searched (classification system followed by classification symbols)

C08K5/01; C08L23/08; C08L23/12; C08L53/02; C08L83/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2021/054271 A1 (MITSUI CHEMICALS INC) 25 March 2021 (2021-03-25)<br>    claims, examples, paragraph [0115] | 1-8 |
| X | WO 2011/155571 A1 (ASAHI KASEI CHEMICALS CORPORATION) 15 December 2011 (2011-12-15)<br>    claims, examples | 1-8 |
| X | JP 10-287775 A (ASAHI CHEM IND CO LTD) 27 October 1998 (1998-10-27)<br>    claims, examples 1, 4, paragraphs [0021], [0035], [0040]-[0041] | 1-8 |
| X | JP 2000-212383 A (SUMITOMO BAKELITE CO LTD) 02 August 2000 (2000-08-02)<br>    claims, examples 1, 3-6, paragraph [0023] | 1-8 |
| X | WO 2010/067564 A1 (ASAHI KASEI CHEMICALS CORPORATION) 17 June 2010 (2010-06-17)<br>    claims, examples 1-3, 5-6, 8, paragraph [0109] | 1-8 |
| X | JP 2016-17162 A (MITSUI CHEMICALS INC) 01 February 2016 (2016-02-01)<br>    claims, example 3, paragraphs [0104], [0112], [0153] | 1-8 |

☐ Further documents are listed in the continuation of Box C.        ☑ See patent family annex.

| | |
| --- | --- |
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |
| Date of the actual completion of the international search<br><br>**02 March 2022** | Date of mailing of the international search report<br><br>**15 March 2022** |
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br>Telephone No. |

Form PCT/ISA/210 (second sheet) (January 2015)

INTERNATIONAL SEARCH REPORT
Information on patent family members

International application No.

**PCT/JP2022/003164**

| Patent document cited in search report | | | Publication date (day/month/year) | Patent family member(s) | | | Publication date (day/month/year) |
|---|---|---|---|---|---|---|---|
| WO | 2021/054271 | A1 | 25 March 2021 | (Family: none) | | | |
| WO | 2011/155571 | A1 | 15 December 2011 | US claims, examples | 2013/0209787 | A1 | |
| | | | | EP | 2581412 | A1 | |
| | | | | CN | 103025822 | A | |
| | | | | KR 10-2013-0020898 | | A | |
| JP | 10-287775 | A | 27 October 1998 | (Family: none) | | | |
| JP | 2000-212383 | A | 02 August 2000 | (Family: none) | | | |
| WO | 2010/067564 | A1 | 17 June 2010 | US claims, examples 1-3, 5-6, 8, paragraph [0133] | 2011/0281994 | A1 | |
| | | | | EP | 2365031 | A1 | |
| | | | | CN | 102245697 | A | |
| JP | 2016-17162 | A | 01 February 2016 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010067564 A
- WO 2011155571 A
- JP 42008704 B
- JP 43006636 B
- JP 63004841 A
- JP 1037970 A
- JP 1053851 A
- JP 2009041 A
- JP 8109219 A

- JP 36019286 B
- JP 43017979 B
- JP 46032415 A
- JP 49036957 A
- JP 48002423 A
- JP 48004106 A
- JP 56028925 A
- JP 59166518 A
- JP 60186577 A

**Non-patent literature cited in the description**

- **I. M. KOLTHOFF et al.** *J. Polym. Sci.,* 1946, vol. 1, 429